Europäisches Patentamt

European Patent Office

Office européen des brevets

(19)

(11) Publication number:

**0 365 231**

**A2**

(12) # EUROPEAN PATENT APPLICATION

(21) Application number: 89310528.8

(22) Date of filing: 13.10.89

(51) Int. Cl.5: **H01L 41/02**

(30) Priority: 15.10.88 JP 134825/88

(43) Date of publication of application:
**25.04.90 Bulletin 90/17**

(84) Designated Contracting States:
**DE FR GB**

(71) Applicant: SEIKO INSTRUMENTS INC.
31-1, Kameido 6-chome Koto-ku
Tokyo 136(JP)

(72) Inventor: **Mori, Takayuki**
**c/o Seiko Instruments Inc. 31-1 Kameido**
**6-chome**
**Koto-ku Tokyo(JP)**
Inventor: **Kasuga, Masao**
**c/o Seiko Instruments Inc. 31-1 Kameido**
**6-chome**
**Koto-ku Tokyo(JP)**
Inventor: **Suzuki, Minako**
**c/o Seiko Instruments Inc. 31-1 Kameido**
**6-chome**
**Koto-ku Tokyo(JP)**

(74) Representative: **Miller, Joseph et al**
**J. MILLER & CO. Lincoln House 296-302 High**
**Holborn**
**London WC1V 7JH(GB)**

(54) **Progressive wave motor.**

(57) A progressive wave motor has a vibrator unit (10) comprising a resilient member (2) which is secured to and supported by a centre shaft (7), a piezo-electric vibrator (3) connected to one side of and disposed concentrically of the resilient member (2) so as in operation to effect vibration of the latter in a primary vibration mode, a movable member (1) which is in pressure contact with the vibrator unit (10) so as to be moved thereby as a result of the said vibration, at least one electrode (3a) on the piezo-electric vibrator (3), and an electrical lead (4) for the or each electrode (3a), the or each lead (4) being connected to the respective electrode (3a) for the transmission of an electrical input signal to the piezo-electric vibrator (3). The motor is characterised in that the or each lead (4) is connected to its respective electrode (3a) at a point within the radially inner half of the piezo-electric vibrator (3).

Fig. 1

## PROGRESSIVE WAVE MOTOR

This invention concerns a progressive or travelling wave motor.

A progressive wave motor is known having a vibrator unit comprising a resilient member which is secured to and supported by a centre shaft, a piezo-electric vibrator connected to one side of and disposed concentrically of the resilient member so as in operation to effect vibration of the latter in a primary vibration mode, a movable member which is in pressure contact with the vibrator unit so as to be moved thereby as a result of the said vibration, at least one electrode on the piezo-electric vibrator, and an electrical lead for the or each electrode, the or each lead being connected to the respective electrode for the transmission of an electrical input signal to the piezo-electric vibrator.

In the known progressive wave motor, however, the or each lead has been connected by means of a mass of adhesive to its respective electrode either at the radially outer periphery of the latter or at a point within the radially outer half of the piezo-electric vibrator. The mass of the lead and adhesive at such a connection point can cause the said vibration of the resilient member to be reduced partly because the vibrator unit is excited in a primary vibration mode and partly because the outermost periphery of the vibrator unit is the very part in which vibrations are concentrated. As a result, respective electrical characteristics of the motor are badly affected and this results in a decrease in motor performance.

According to the present invention, there is provided a progressive wave motor having a vibrator unit comprising a resilient member which is secured to and supported by a centre shaft, a piezo-electric vibrator connected to one side of and disposed concentrically of the resilient member so as in operation to effect vibration of the latter in a primary vibration mode, a movable member which is in pressure contact with the vibrator unit so as to be moved thereby as a result of the said vibration, at least one electrode on the piezo-electrode vibrator, and an electrical lead for the or each electrode, the or each lead being connected to the respective electrode for transmission of an electrical input signal to the piezo-electric vibrator characterised in that the or each lead is connected to its respective electrode at a point within the radially inner half of the piezo-electric vibrator.

Preferably, the or each lead is connected to its respective electrode at a point adjacent to the radially inner periphery of the latter.

Preferably, the radially inner periphery of the or each electrode is disposed adjacent to the centre shaft.

The radially outer periphery of the or each electrode is preferably aligned with that of the resilient member.

The resilient member is preferably provided on its side remote from the piezo-electric vibrator with at least one projection which is in pressure contact with the movable member.

Thus the invention provides a progressive wave motor in which the said vibration of the vibrator unit is prevented from being unnecessarily reduced, so that the progressive wave motor can have an efficiently stabilized performance.

If the or each lead is connected to its respective electrode as close as possible to the centre shaft, the primary vibration of the vibrator unit will not be adversely affected by the mass of the lead whereby the vertical amplitude of the vibrator unit is prevented from being unnecessarily decreased.

At the junction of the or each lead with the progressive wave motor thus constructed, the distribution of radial vibrations in the primary vibration mode of the vibrator unit is smallest at the centre shaft and is greatest at the outermost periphery thereof. Since the invention ensures that the junction is at a point which is least affected by the mass of the lead, the vibration of the vibrator unit is prevented from being unecessarily decreased, thus enabling the performance of the motor to be stabilized with efficiency.

The invention is illustrated, merely by way of example, in the accompanying drawings in which:-

Figure 1 is a sectional view of a progressive wave motor according to the present invention;

Figures 2 and 3 are sectional views illustrating examples of the prior art;

Figures 4A and 4B are diagrams showing the relationship between the position of a junction of a lead wire and motor performance;

Figures 5A, 5B and 5C are graphs showing the relationship between the position of the said junction of the lead wire and motor speed; and

Figures 6A, 6B and 6C are graphs showing the relationship between the position of the said junction of the lead wire and a mechanical load which can be driven by the motor.

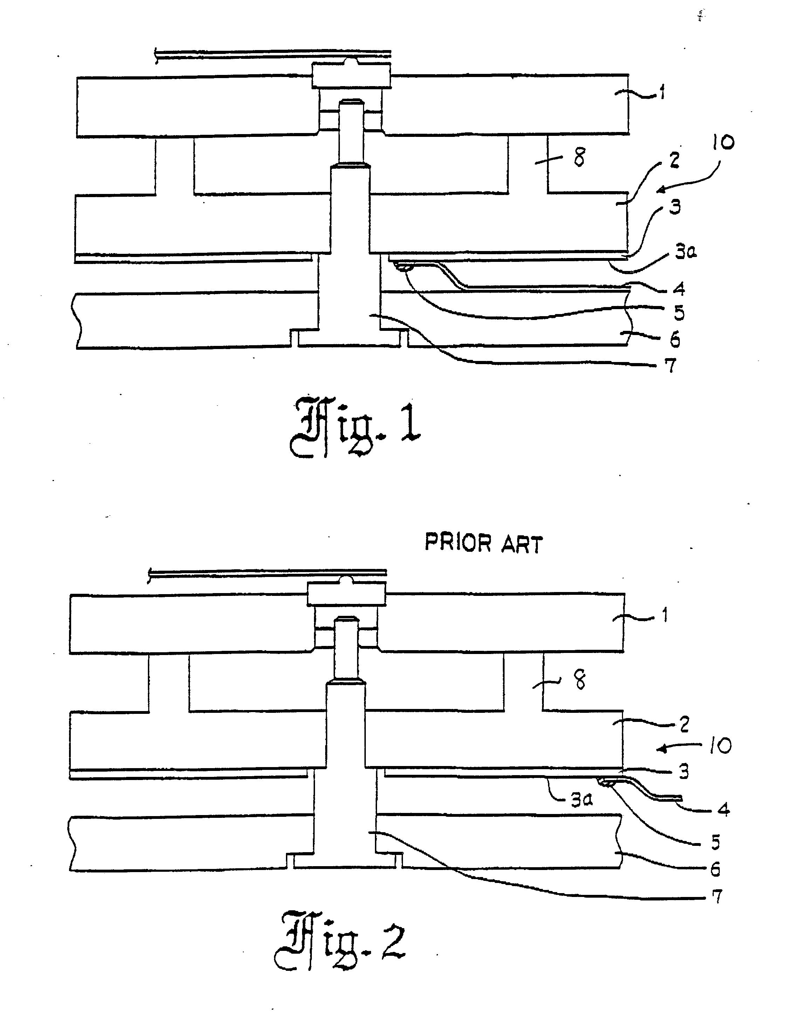

In Figure 1 there is shown a progressive wave motor having a vibrator unit 10 comprising a centre shaft 7 which is driven into and fixed to a base plate 6. Further, the centre shaft 7 is driven into and fixed to a resilient vibrator member 2 which is thus secured to and supported by the centre shaft 7. The resilient member 2 and a piezo-electric vibrator 3 which is disposed on one side of and is concentric with the latter are fixedly combined by means of an adhesive 5. The resilient member 2 converts the expansion movement of the piezo-electric vibrator 3 into a wave movement. That is to say, the piezo-electric vibrator 3 in operation effects vibration of the resilient member 2 in a primary vibration mode.

On the piezo-electric vibrator 3, there are formed two electrode patterns 3a which are electrically independent of each other and which are arranged to receive input signals so as to produce the respective vibrations. The electrode patterns 3a are disposed on the side of the piezo-electric vibrator 3 opposite to the side thereof which is secured to the resilient member 2. Although the electrode patterns 3a are radially extended from the vicinity of the centre shaft 7 up to the outermost periphery of the resilient member 2 a respective lead wire 4, by means of which an electrical input signal can be transmitted to the piezo-electric vibrator 3, is connected to each electrode pattern 3a at a point within the inner half radius of the piezo-electric vibrator 3 and preferably as close to the centre shaft 7 as possible. (In order to simplify the drawings, only one lead wire 4 is shown.) Any part of the resilient member 2 which is close to the centre shaft 7 remains substantially unaffected by the mass of the lead wire 4 even though the mass of the lead wire 4 does have some small effect on the part fairly close to the centre shaft 7 of the resilient member 2 whose vibration mode is primary.

A movable member 1 is rotatably mounted on the centre shaft 7 and is in pressure contact with an annular projection or a plurality of projections 8 of the resilient member 2. The arrangment is such that the movable member 1 is driven so as rotate by exitation of the resilient member 2 in a primary vibration mode.

If the respective lead wire 4 is connected as close as possible to the centre shaft 7 of the piezo-electric vibrator 3 the vibration of the resilient member 2 can be least affected thereby.

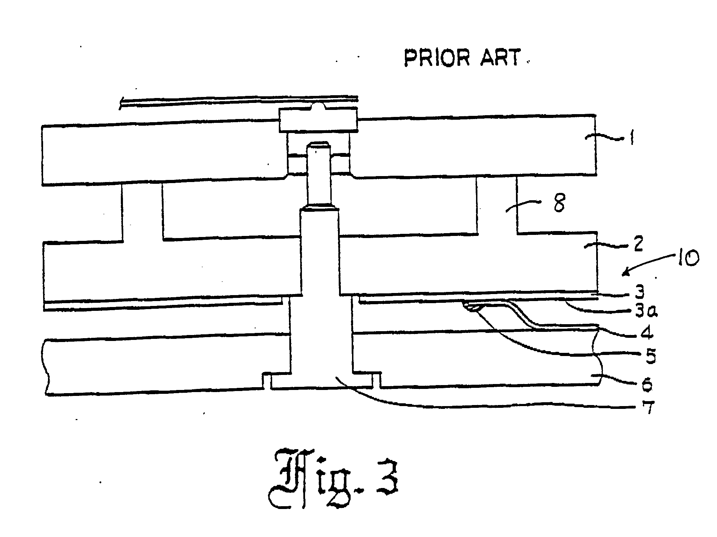

Figures 2 and 3 illustrate known progressive wave motors. The vibration of the resilient member 2 of a progressive wave motor is least affected by the lead wire when the arrangement is as shown in Figure 1 in which the lead wire is connected to the innermost periphery of the electrode pattern 3a of the piezo-electric vibrator 3. In the case of Figure 2, however, the lead wire 4 is disposed at the outermost periphery of the electrode pattern 3a of the piezo-electric vibrator 3 and, because the vibration of the resilient member 2 is at is maximum at the outermost periphery, the vibration of the resilient member 2 is seriously affected thereby in the Figure 2 construction.

When the junction of the lead wire 4 is disposed in the radially outer half of the piezo-electric vibrator 3 but towards the centre of the electrode pattern of 3a of the piezo-electric vibrator 3 as shown in Figure 3, the vibration of the resilient member 2 will also be greatly affected.

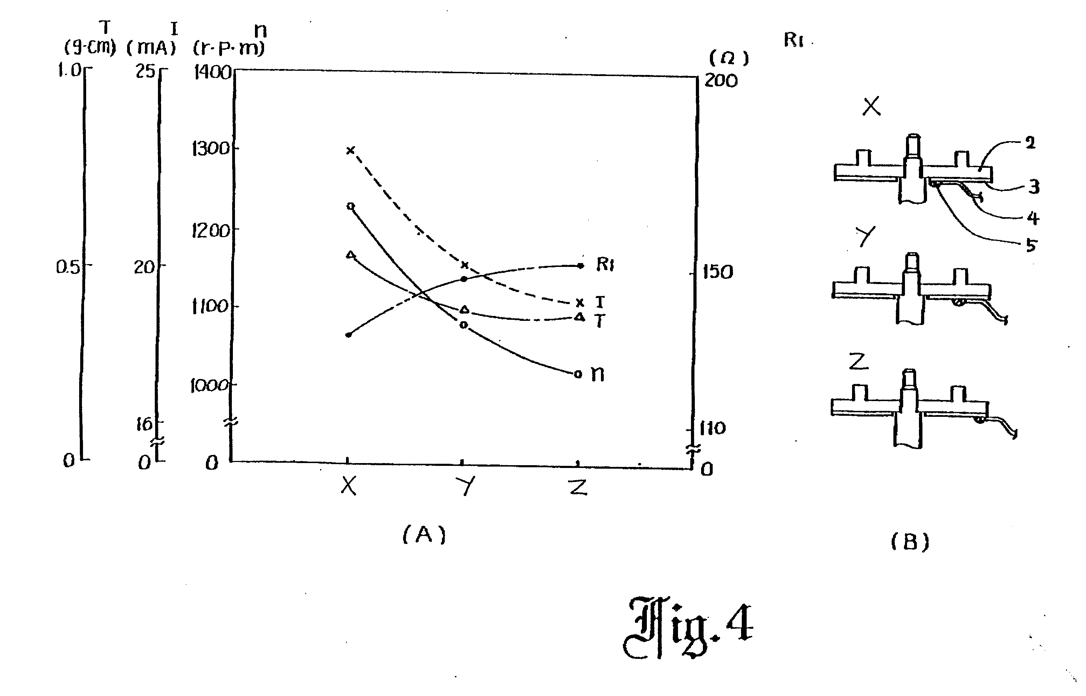

Figure 4A is a diagram quantitatively illustrating the variation of certain characteristics of a progressive wave motor when the latter has the constructions illustrated diagrammatically at X, Y, and Z in Figure 4(B). With respect to torque T, the speed n and the current I characteristics, the characteristic values tend to become inferior as the junction of the lead wire 4 is moved from the inner periphery toward the outer periphery of the electrode pattern 3a. One of the characteristics which is indicated in the graph on Figure 4(A) is R1 which designates a series resonance resistor representing a mechanical load of the progressive wave motor. Even in the case of this characteristic R1, the load tends to increase as the junction of the lead wire 4 moves toward the outer periphery of the electrode pattern 3a of the piezo-electric vibrator 3.

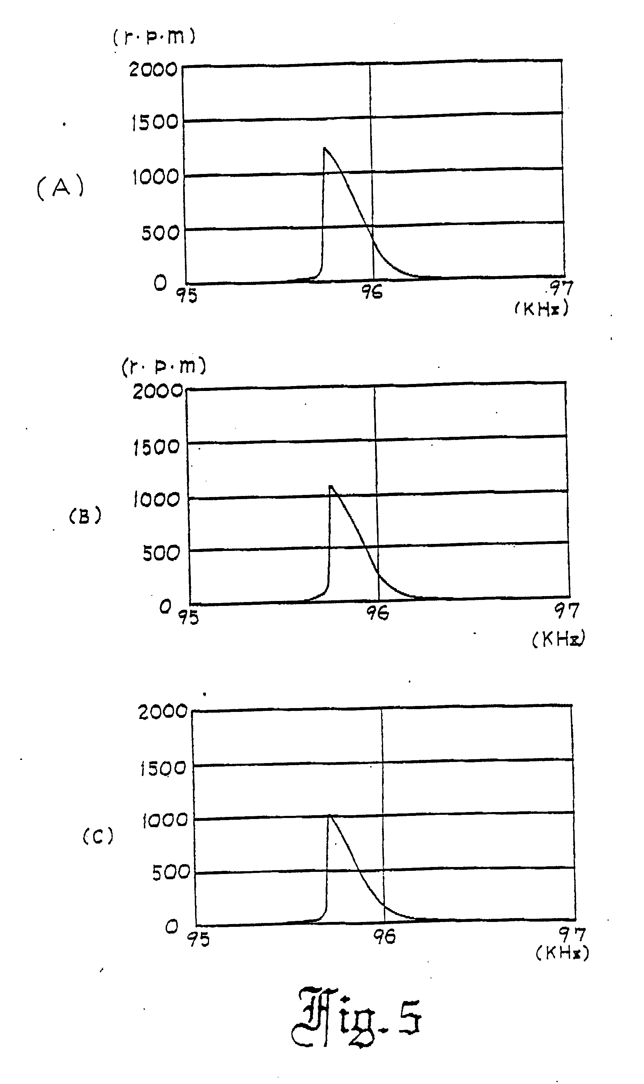

Figures 5A, 5B and 5C shown the relationship of the drive frequency (KHz) of the progressive wave motor to the speed (r.p.m.) characteristics at the respective junctions of the lead wire 4 shown at X, Y, Z in Figure 4(B).

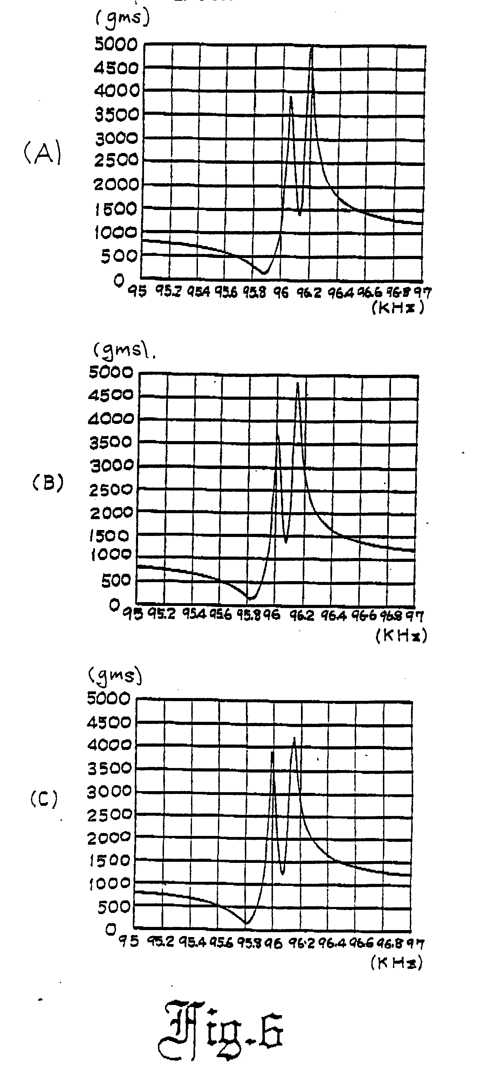

Figures 6A, 6B and 6C show the relationship of the drive frequency (KHz) of the progressive wave motor to mechanical loads at the respective junctions of the lead wire 4 shown at X, Y, Z in Figure 4(B) with the minimum value of the impedance displayed as R1.

In the embodiment shown in Figure 1, provided the junction of the lead wire 4 with the electrode pattern 3a of the piezo-electric vibrator 3 is set as close as possible to the centre shaft 7, the reduction in the vibration of the resilient member 2 can be made smaller than that in any other case of setting the junction thereof with a resultant improvement in the respective characteristics of the progressive wave motor.

## Claims

1. A progressive wave motor having a vibrator unit (10) comprising a resilient member (2) which is secured to and supported by a centre shaft (7), a piezo-electric vibrator (3) connected to one side of and disposed concentrically of the resilient member (2) so as in operation to effect vibration of the latter in a primary vibration mode, a movable member (1) which is in pressure contact with the vibrator unit (10) so as to be moved thereby as a result of the said vibration, at least one electrode (3a) on the piezo-electric vibrator (3), and an electrical lead (4) for the or each electrode (3a), the or each lead (4) being connected to the respective electrode (3a) for the transmission of an electrical input signal to the piezo-electric vibrator (3) characterised in that the or each lead (4) is connected to its respective electrode (3a) at a point within the radially inner half of the piezo-electric vibrator (3).

2. A progressive wave motor as claimed in claim 1 characterised in that the or each lead (4) is connected to its respective electrode (3a) at a point adjacent to the radially inner periphery of the latter.

3. A progressive wave motor as claimed in claim 2 characterised in that the radially inner periphery of the or each electrode (3a) is disposed adjacent to the centre shaft (7).

4. A progressive wave motor as claimed in claim 2 or characterised in that the radially outer periphery of the or each electrode (3a) is aligned with that of the resilient member (2).

5. A progressive wave motor as claimed in any preceding claim characterised in that the resilient member (2) is provided on it side remote from the piezo-electric vibrator (3) with at least one projection (8) which is in pressure contact with the movable member (1).

6. A junction of a lead wire with a progressive wave motor comprising a vibrator unit having a centre shaft and an elastic member secured to and supported by said centre shaft, a piezo-electric vibrator connected to one side of the said vibrator unit, a moving unit disposed so as to come pressure contact with said moving unit, said motor being used to drive said moving unit by exiting said vibrator unit in primary vibration mode, characterised in that said lead wire for transmitting an electric input signal to said piezo-electric vibrator is connected to an electric pattern formed on the surface of said piezo-electric vibrator at a point within the inner half radius of said piezo-electric vibrator.

7. A junction of lead wire with a progressive wave motor as claimed in claim 6, wherein said lead wire is connected to the closest-to-centre-shaft electrode pattern.

**Fig. 1**

PRIOR ART

**Fig. 2**

PRIOR ART

$\mathfrak{Fig.}\ 3$

Fig. 4

Fig. 5

(gms)

(A)

5000
4500
4000
3500
3000
2500
2000
1500
1000
500
0
95 95.2 95.4 95.6 95.8 96 96.2 96.4 96.6 96.8 97
(KHz)

(gms)

(B)

5000
4500
4000
3500
3000
2500
2000
1500
1000
500
0
95 95.2 95.4 95.6 95.8 96 96.2 96.4 96.6 96.8 97
(KHz)

(gms)

(C)

5000
4500
4000
3500
3000
2500
2000
1500
1000
500
0
95 95.2 95.4 95.6 95.8 96 96.2 96.4 96.6 96.8 97
(KHz)

Fig.6